# EUROPÄISCHE PATENTANMELDUNG

(11) **EP 0 607 790 A1**
(43) Veröffentlichungstag der Anmeldung: **27.07.1994**
(21) Anmeldenummer: 94100043.2
(22) Anmeldetag: 04.01.1994
(51) Int. Cl.: B29B 17/02, B03B 9/06, B29B 9/08

(54) **Verfahren und Vorrichtung zum Aufbereiten von Kunststoffabfall**

(30) Priorität: 16.01.1993 DE 4301066
(71) Anmelder: INGENIEURGESELLSCHAFT FÜR UMWELTTECHNIK UTS mbH, D-77790 Steinach i.K. (DE)
(72) Erfinder: Blank, Reinhard A., Dr. Ing., D-77790 Steinach (DE); Ranosch, Georg, D-77709 Wolfach (DE)
(74) Vertreter: Dipl.-Ing. Heiner Lichti Dipl.-Phys. Dr.rer.nat. Jost Lempert Dipl.-Ing. Hartmut Lasch

(57) **Zusammenfassung**

Zur Aufbereitung aus unterschiedlichen Kunststoffen, gegebenenfalls in Verbund mit weiteren Materialien bestehendem Kunststoffabfalls zwecks Weiterverarbeitung, beispielsweise als Zuschlagstoffe im Bauwesen, sieht die Erfindung ein Verfahren vor, welches dadurch gekennzeichnet ist, daß der Abfall zerkleinert wird, daß Metalle abgeschieden werden, daß der Kunststoffabfall agglomeriert wird und der agglomerierte Abfall weiter zerkleinert wird. Eine erfindungsgemäße Vorrichtung zur Durchführung des Verfahrens ist gekennzeichnet durch Zerkleinerungseinrichtungen, Metallabscheider und mindestens einen Agglomerator. Die gesamte Vorrichtung zeichnet sich dadurch aus, daß sie vollmobil und mit eigener Energieversorgung ausgestattet ist.

## Beschreibung

Die Erfindung betrifft ein Verfahren zum Aufbereiten von aus unterschiedlichen Kunststoffen bestehendem Kunststoffabfall, gegebenenfalls im Verbund mit weiteren Materialien, zur weiteren Verarbeitung sowie eine Vorrichtung zum Aufbereiten von aus unterschiedlichen Kunststoffen bestehendem Kunststoffabfall, gegebenenfalls in Verbund mit weiteren Materialien, zur weiteren Verarbeitung.

Abfall wird heute derart gesammelt, daß einerseits sogenannte Wertstoffe zusammen in den Haushalten in ein Behältnis gegeben werden und andererseits verwesbare und verfaulbare bzw. stark verschmutzte sonstige Materialien in ein anderes Behältnis gegeben werden.

Die Wertstoffe können ebenfalls leicht verschmutzt sein. Sie bestehen aus unterschiedlichsten Kunststoffen, wie Polyethylen, Polypropylen, Polystyrol, PVC etc., Karton, Papier, Metallen, gegebenenfalls sonstiger Zellulose usw.

In einer Abfallsammelstelle erfolgt eine Trennung bzw. Aussortierung der grundsätzlich unterschiedlichen Materialien, nämlich Kunststoffe einerseits, Kartons und größere Metalle andererseits.

Darüber hinaus ist zum Teil eine Feinsortierung der unterschiedlichen Kunststoffe vorgesehen, insbesondere wenn zunächst eine Nachfrage nach speziellen wiederaufbereitbaren Kunststoffen, wie Polypropylen oder dergleichen, besteht und eine ganz spezielle Kunststoffart ohne großen Aufwand gezielt aussortiert werden kann, wie beispielsweise Joghurtbecher.

In dem Kunststoffabfall bzw. der Kunststofffraktion bleiben aber eine Vielzahl von Gegenständen aus unterschiedlichsten Kunststoffen, die darüber hinaus leicht verschmutzt sind und im Verbund mit weiteren Materialien stehen können, wie Metalldeckelreste bei Joghurtbechern oder dergleichen. Eine weitere Auftrennung und Sortierung ist oft aus technischen Gründen nicht möglich, teilweise auch aus wirtschaftlichen Gründen nicht gewünscht oder nicht machbar.

Bisher wurden diese nicht weiter trennbaren, aufbereitbaren und verarbeitbaren Kunststoffe, die oft Folien, Plastiktüten etc. enthalten, zu Ballen verpackt und als solche bei der Abfallsammelstelle zwischengelagert. Die Zwischenlagerung in Ballen ist mit erheblichen Risiken verbunden, da sehr leicht eine Selbstentzündung stattfinden kann und zumindestens in einem konkreten Fall erfolgt ist, wo gerade derartig gelagerte Kunststoffballen in Brand geraten sind. Hierbei kann, insbesondere wenn der Kunststoffabfall PVC enthält, beim Brand Dioxin entstehen.

Ein weiterer Nachteil der direkt erfolgenden Zwischenlagerung in Kunststoffballen besteht darin, daß das verschmutzte Material, das zu den Ballen zusammengepreßt wurde, nicht biologisch inert ist. Bakterien arbeiten in den Verschmutzungsbestandteilen und führen dazu, daß die Ballen sich aufweiten, das Volumen vergrößert wird und sogar Umhüllungen platzen können.

Die vorstehend genannten Problematiken ergeben sich teilweise daraus, daß kein mehr oder minder kontinuierlicher oder quasi kontinuierlicher Anfall des entsprechenden Kunststoffmaterials erfolgt, sondern daß dieser lediglich an wenigen, wie an einem oder höchstens zwei Tagen pro Woche oder pro 14 Tagen bei einer Sammelstelle anfällt, aus logistischen Gründen aber sofort weiterverarbeitet werden muß, sei es eben auch nur zur Zwischenlagerung in Form von Kunststoffballen oder aber in andersartiger Weise. Darüber hinaus ist die an einer Sammelstelle anfallende Abfallmenge oft so gering, daß stationäre Verarbeitungsmaschinen, wie Regranuliermaschinen, nur kurze Zeit, nämlich mehrere Stunden, genutzt sind, da nicht genügend Abfallmenge zur Verfügung steht, um derartige Maschinen über die gesamte Arbeitszeit einer Woche oder von 14 Tagen bis zum nächsten Anfalltag des entsprechenden Wertstoffabfalls zu nutzen.

Ausgehend von diesem Stand der Technik und den genannten Nachteilen liegt der Erfindung die Aufgabe zugrunde, ein Verfahren und eine Vorrichtung anzugeben, die eine optimale Verarbeitung nicht fein sortierten, aus unterschiedlichen Kunststoffen bestehenden Kunststoffabfalls, gegebenenfalls in Verbund mit weiteren Materialien, wie Papier, Karton und Metallen, vorsehen, wobei insbesondere eine Brandgefahr sowie biologische Vorgänge des verarbeiteten Materials ausgeschlossen werden sollen.

Erfindungsgemäß wird die genannte Aufgabe mit einem Verfahren der eingangs genannten Art gelöst, welches dadurch gekennzeichnet ist, daß der Abfall zerkleinert wird, daß Metalle abgeschieden werden, daß der Kunststoffabfall agglomeriert wird und der agglomerierte Abfall weiter zerkleinert wird. Eine erfindungsgemäße Vorrichtung insbesondere zur Durchführung des Verfahrens sieht Zerkleinerungseinrichtungen, Metallabscheider und mindestens einen Agglomerator vor.

Gemäß bevorzugterAusgestattungen des erfindungsgemäßen Verfahrens ist vorgesehen, daß der Kunststoffabfall vor Agglomerierung in zwei Stufen zerkleinert wird, wobei insbesondere voluminöse Kunststoffteile mittels Zwangszuführung einer ersten Zerkleinerungsstufe zugeführt werden und die Kunststoffabfalltei le vor der Metallabscheidung auf eine Größe von ca. 10 mm zerkleinert werden. Bei einer anderen bevorzugten Ausführungsform des erfindungsgemäßen Verfahrens erfolgt bereits vor der ersten Zerkleinerungsstufe eine erste Metallabscheidung, die mittels eines Metalldetektors sowie manuellen Entfernens der Metallteile durchgeführt wird. Auf diese Weise können größere Metallteile, die bei der Vorsortierung im Kunststoffabfall verblieben sind, vor der Zerkleinerung bereits entfernt werden.

Weitere bevorzugte Ausgestaltungen der ersten erfindungsgemäßen Ausführungsform des Verfahrens sehen vor, daß magnetisierbare Metalle mittels Magneten aus dem Kunststoffabfall herausgehoben werden und Buntmetalle mittels elektrostatischer Abscheidung entfernt werden. Hierdurch werden nur durch die Zerkleinerung und Vorzerkleinerung von dem sonstigen Kunststoff getrennte Metalle abgeschieden, während an den Kunststoffteilchen haftende Restmetalle, wie Reste von Joghurtdeckeln etc., der weiteren Verarbeitung der Kunststoffteilchen zugeführt werden können, ohne daß sie stören, soweit der Kunststoffanteil der weit überwiegende ist.

In äußerst bevorzugter Ausgestaltung kann vorgesehen sein, daß die zerkleinerten Kunststoffabfallteile vor Agglomeration zwischengespeichert werden, um eine kontinuierlich erfolgende Agglomeration zu gewährleisten. Die Agglomeration der Kunststoffteilchen erfolgt dadurch, daß diese angeschmolzen und anschließend durch ein Sieb bzw. eine Matrize gepreßt werden. Nach Abschrecken mit Wasser und/ oder nach einer Kühlung kann sich eine weitere Zerkleinerung bis auf Teilchengrößen von 3 mm oder weniger anschließen. Hierzu und auch zur weiteren Verarbeitung ist eine Kühlung der sich bei der Agglomerierung und der Zerkleinerung aufheizenden Kunststoffteilchen sinnvoll, wobei die Kühlung bis auf maximal 40 °C erfolgen soll.

Bei der Agglomerierung und weiteren Zerkleinerung sollte ein Temperaturbereich gewählt werden, der im Bereich zwischen 80 und 100 °C liegt, um einerseits durch zu hohe Temperaturen eine Beschädigung oder Zerstörung der Kunststoffeigenschaften der Kunststoffe zu vermeiden, andererseits aber durch hinreichend hohe Temperaturen über 80 °C eine Zerstörung von in Schmutzanteilen des Abfalls enthaltenen Mikroorganismen zu erreichen, damit ein hygienisch einwandfreies und biologisch inertes Endprodukt erhalten wird. Es hat sich herausgestellt, daß dies mittels des erfindungsgemäßen Verfahrens und der erfindungsgemäßen Vorrichtung ohne weiteres erreichbar ist. Das Material weist auch nach langer Lagerzeit keinerlei Geruchsentwicklung auf.

Bevor der Kunststoffabfall einer weiteren Zerkleinerung zugeführt wird, ist in bevorzugter Ausgestaltung der zweiten Ausführungsform des erfindungsgemäßen Verfahrens vorgesehen, daß die bereits eine vorgegebene Korngröße aufweisenden Kunststoffteile von den übrigen Kunststoffteilen getrennt werden. Weiterbildungen sehen vor, daß von den weiter zu zerkleinernden Kunststoffteilen Magnetteile abgeschieden werden. Hierdurch werden die durch die Zerkleinerung mit Vorzerkleinerung von dem sonstigen Kunststoff getrennten Metalle bevorzugt mittels einer Magnetwalze aus dem Kunststoffabfall entfernt. Die an den Kunststoffteilchen haftenden Restmetalle werden derweiteren Zerkleinerung zugeführt, ohne daß sie stören, soweit der Kunststoffanteil der weit überwiegende ist.

Eine erfindungsgemäße Vorrichtung ist in bevorzugter Weise dadurch ausgestaltet, daß eine Annahmevorrichtung mit einem Vorzerkleinerer für voluminöse Teile versehen ist, wobei insbesondere der Vorzerkleinerer Schneidmühlen aufweist und eine Zwangszuführung mit einem hydraulisch bewegten Zuführstempel vorgesehen ist.

Die weitere Zerkleinerung kann durch Shredder oder Vorschneidmühlen mit Schurre erfolgen.

Zur Metallabscheidung sind einerseits ein Überbandmagnet und andererseits ein elektrostatischer Metallabscheider für Buntmetalle vorgesehen. Oder aber die Vorrichtung weist hierzu einerseits eine Magnetwalze auf und andererseits ist der Vorschneidmühle mit Schurre ein Metalldetektor vorgeordnet.

Weitere bevorzugte Ausgestaltungen sehen vor, daß vor dem Agglomerator ein Zwischenspeicher zur Sicherstellung einer kontinuierlichen Versorgung des Agglomerators mit Kunststoffteilchen angeordnet ist und daß der Zwischenspeicher auf dem Agglomerator angeordnet ist, so daß d ie Kunststoffschnitzel durch Schwerkraft in den Agglomerator fallen können, wobei insbesondere der Aggiomerator ein Sieb bzw. eine Matrize und die Kunststoffschnitzel nach Anschmelzen durch das Sieb pressende Rotormesser aufweist.

Dem Agglomerator ist bei einer ersten Ausführungsform eine erste Kühleinrichtung nachgeordnet, der sich eine Nachschneidemühle anschließen kann, die derart eingestellt ist, daß die Endteilchengrößen 3 mm oder wenigerim Durchmesser haben. Bei einer anderen Ausfü hrungsform ist der Agglomerator mit einerAnlage zum Zuführen von Wasser verbunden. Hierdurch erfolgt ein Abschrecken der Kunststoffteile. Des weiteren ist in Förderrichtung des zu verarbeitenden Kunststoffabfalls hinter dem Agglomerator bevorzugt eine Siebrinne zum Trennen des Kunststoffabfalls angeordnet. Die bereits die vorgegebene Korngröße aufweisenden Kunststoffteile können auf diese Weise bereits separiert werden und über ein dem Unterlauf der Siebrinne nachgeordnetes Gebläse mit Zyklon abtransportiert werden. Für die gröberen Kunststoffteile ist im Oberlauf der Siebrinne eine Magnetwalze zur Abscheidung eisenhaltiger Metalle aus dem Kunststoffabfall nachgeordnet.

Durch das erfindungsgemäße Verfahren und die erfindungsgemäße Vorrichtung, insbesondere die Agglomerierung und weitere Zerkleinerung nach den vorbereitenden Arbeitsschritten bzw. den zur Vorbereitung der Agglomerierung vorgesehenen Arbeitsstationen, erfolgt eine Granulierung des Kunststoffmaterials.

Das erhaltene Granulat kann in vielfältiger Weise eingesetzt und weiterverwertet werden, wie vorzugsweise im Untertagebau als Ersatz für Quarzsande und Anhydrite beim Versatz mit Zement. Ein wesentlicher Vorteil dieser erfindungsgemäßen Zuschlagstoffe für den Untertagebergbau ist darin zu sehen, daß das erhaltene Granulatmaterial keine Wasseraufnahme ermöglicht, es in gewichtsmäßiger Hinsicht leicht und daher leicht förderbar ist mittels Fluidförderern etc.

Alternativ zurvorgenannten Verwendung kann das Material auch später hydriert werden. Ein weiterer Einsatzbereich ist als Zuschlagstoff zu Leichtbeton zu sehen, wobei die vorgenannten Eigenschaften hier ebenfalls wesentlich sind, nämlich leichtes Gewicht sowie Ausschluß jeder Wasseraufnahme.

Gemäß bevorzugter Ausgestaltungen des Verfahrens kann insbesondere im Falle der Verwendung als Baustoffzusatz zu Leichtbeton vorgesehen sein, daß bei der Agglomerierung Additive zugesetzt werden, wie Sande, Korunde, Silicium-oxide (Quarzsande) oder dergleichen.

Weiterhin kann zur biologischen Inertisierung vor der Agglomerierung, gegebenenfalls auch vor der Zerkleinerung, ein Waschen des Kunststoffabfalls vorgenommen werden. Es hat sich aber herausgestellt, daß die oben erwähnte Temperaturbehandlung durchaus ausreicht, um ein biologisch inertes Material zu erzielen.

Die erfindungsgemäße Vorrichtung schafft bei einem Durchsatz von 1.000 kg pro Stunde im Jahr 2500 Tonnen, was einem Mengenaufkommen von etwa 300.000 Einwohnern im Jahr entspricht.

Insgesamt schafft die Erfindung ein Verfahren und eine Vorrichtung, mit denen in ökonomisch äußerst optimaler Weise technisch zuverlässig, ohne hohen Sortierungsaufwand unterschiedlichste Kunststoffe verarbeitet, nämlich granuliert werden können, um so ein Material zu ergeben, das einer weiteren Verwendung, sei es eben im Baustoffsektor unter Tage oder als Zuschlagstoff zu Beton, zugänglich ist und gegebenenfalls auch später chemisch weiterverarbeitet werden kann, beispielsweise durch Hydrierung.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnung im einzelnen erläutert sind. Dabei zeigt:
Figur 1 ein Ablaufdiagramm einer bevorzugten Ausführungsform des erfindungsgemäßen Verfahrens;
Figur 2 eine schematische Darstellung einer erfindungsgemäßen Vorrichtung zur Durchführung des Verfahrens nach Figur 1;
Figur 3 eine Darstellung der erfindungsgemäßen transportablen, kompakten Vorrichtung;
Figur 4 eine weitere Ausgestaltung der erfindungsgemäßen Vorrichtung in schematischer Darstellung;
Figur 5 eine zweite Ausführungsform der erfindungsgemäßen Vorrichtung zur Durchführung einerzweiten Ausführungsform des erfindungsgemäßen Verfahrens; und
Figur 6 eine Draufsicht auf die Vorrichtung aus Figur 5.

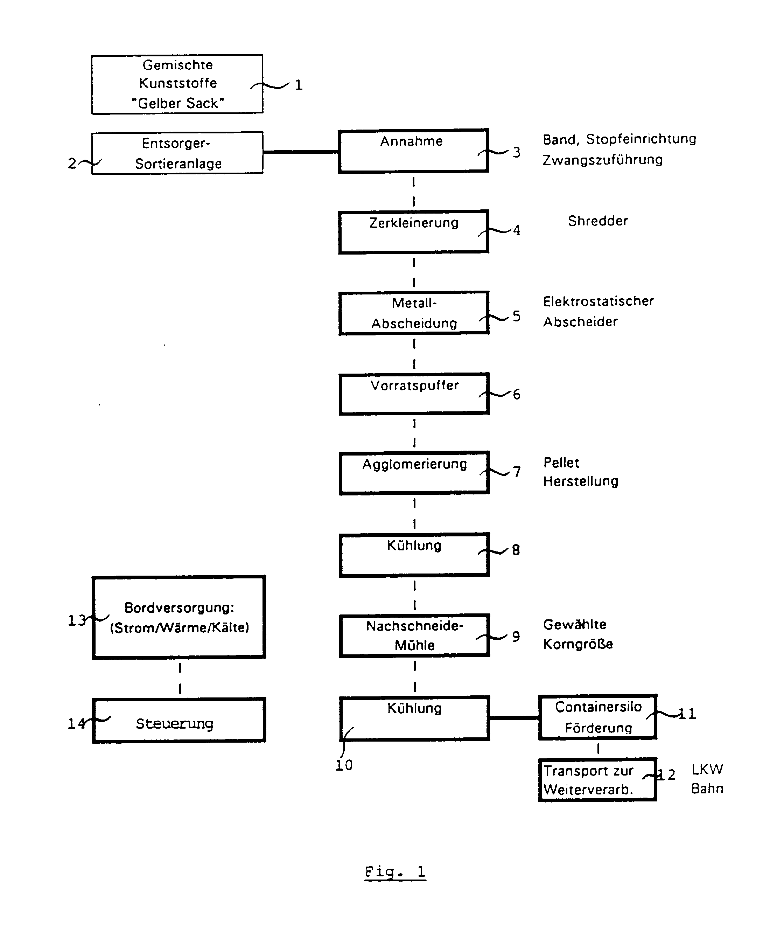

Das erfindungsgemäße Verfahren geht von einer Abfallentsorgung aus, bei der nicht oder relativ wenig verschmutzte Wertstoffe separat von sonstigen, insbesondere verwesbaren, Abfällen gesammelt werden. Dies ist in der Figur 1 durch das Kästchen "Gelber Sack", das mit dem Bezugszeichen 1 versehen ist, angedeutet. Die Wertstoffe werden einer Sortieranlage 2 zugeführt, auf der manuell oder teilautomatisch Sortiervorgänge durchgeführt werden können, wie das Heraussortieren ganz spezieller Kunststoffteile aus einem definierten Kunststoffmaterial, wie beispielsweise sämtlicher Joghurtbecher, oder das Heraussortieren von Papier und Kartongegenständen sowie Metallen. Dem eigentlichen erfindungsgemäßen Verfahren und damit auch der zur Durchführung dieses vorgesehenen erfindungsgemäßen Vorrichtung - wobei dieses Verfahren in der mittleren Spalte der Figur 1 dargestellt ist - werden lediglich Kunststoffabfälle zugeführt, wobei diese aber einerseits in hohem Maße gemischt sind und unterschiedlichste Kunststoffarten enthalten können, wie Polyethylen, Polypropylen, Polystyrol, PVC, und andererseits durchaus auch Verbundmaterialien mit Metallen, wie Metalldeckelresten bei Kunststoffbechern oder Papier und Pappe vorliegen können, wobei allerdings der Kunststoffanteil der überwiegende sein sollte. Das erfindungsgemäße Verfahren ermöglicht demgemäß die Wiederaufbereitung zur Verwertung von nichtverwesbaren Kunststoffabfällen im beschriebenen Rahmen, ohne daß ein hoher Selektionsaufwand erforderlich ist; insbesondere können mittels des erfindungsgemäßen Verfahrens Kunststoffabfälle aufbereitet und einer Weiterverwertung zugeführt werden, die nicht sortenrein rückführbarsind (recyclebar), sei es, weil dies technisch nicht möglich ist oder aber wirtschaftlich zu aufwendig bzw. für entsprechende Kunststoffe kein Bedarf besteht.

Der entsprechend vorsortierte Kunststoffabfall, der erfindungsgemäß verarbeitet werden soll, wird bei 3 dem erfindungsgemäßen Verfahren zugeführt, wobei schon eine erste Vorzerkleinerung erfolgen kann. Das Material wird dann zwangsweise, beispielsweise durch ein Band oder eine Stopfeinrichtung, einer Zerkleinerung zugeführt, die durch einen Shredder gebildet sein kann, in dem das Gut in eine Schnitzelgröße mit einem Flächendurchmesservon 10 mm zerkleinert wird. Bei dieser Zerkleinerung werden auch MetallejeglicherArt mitzerkleinert (Bezugszeichen 4). In einem weiteren Verfahrensschritt erfolgt eine Metallabscheidung, wobei diese zweifach ist. Einerseits werden magnetisierbare oder eisenhaltige Metalle mittels eines Magneten, vorzugsweise eines über einem Förderband angeordneten Überbandmagneten, entfernt, während andererseits mittels eines elektrostatischen Abscheiders freie Buntmetallstückchen, die auch relativ klein sein können (bis unter 5 mm), entfernt werden.

In der nächsten Hauptstufe 7 des erfindungsgemäßen Verfahrens erfolgt eine Agglomerierung des zerkleinerten Kunststoffmaterials. Da diese kontinuierlich erfolgen sollte, wird das Material bei 6 in einem Vorratspufferzwischengespeichert, aus dem es kontinuierlich zur Agglomerierung abgezogen werden kann, beispielsweise lediglich durch Schwerkraft. Die Agglomerierung kann durch Rotormesser erfolgen, die aufgrund ihrer Reibungs- oder Friktionskräfte die Kunststoffschnitzel anschmelzen und sie gleichzeitig durch ein Sieb mit einer vorgewählten Lochgröße pressen.

Anschließend erfolgt eine Kühlung 8 der agglomerierten Kunststoffteilchen von der bei der Agglomerierung sich ergebenden Temperatur von ca. 100 °C bis auf eine Temperatur von 40 °C, die zur Weiterverarbeitung und zum Transport erforderlich ist. Die Kühlung kann mittels Luftkühlung oder eines Kühlwasserkreislaufes in einem Kühler erfolgen.

Die agglomerierten Kunststoffe werden im Anschluß hieran bei 9 noch einmal zerkleinert, und zwar bis auf eine definierte Korngröße von 3 mm oder weniger. Dies kann durch eine Schneidmühle geschehen.

Da auch hier aufgrund des Bearbeitungsvorganges eine Temperaturerhöhung erfolgen kann, ist vorzugsweise eine weitere Kühlung 10 vorgesehen, um das Material wieder auf eine Maximaltemperatur von 40 °C abzukühlen. Dies kann in der oben erläuterten Weise erfolgen.

Die auf die gewünschte Korngröße zerkleinerten und gekühlten Agglomerate werden dann, wie mittels einer Schnecke oder pneumatisch, zur Bevorratung, wie in ein Silo 11, gefördert, von dem aus der weitere Transport zur Endverarbeitung in geeigneter Weise mittels LKW und/oder Bahn 12 erfolgen kann.

Es kann eine völlig autonome Strom-Wärme- und Kälteversorgung 13 für das erfindungsgemäße Verfahren vorgesehen sein, wobei dies durch eine Steuerung 14 erfolgt.

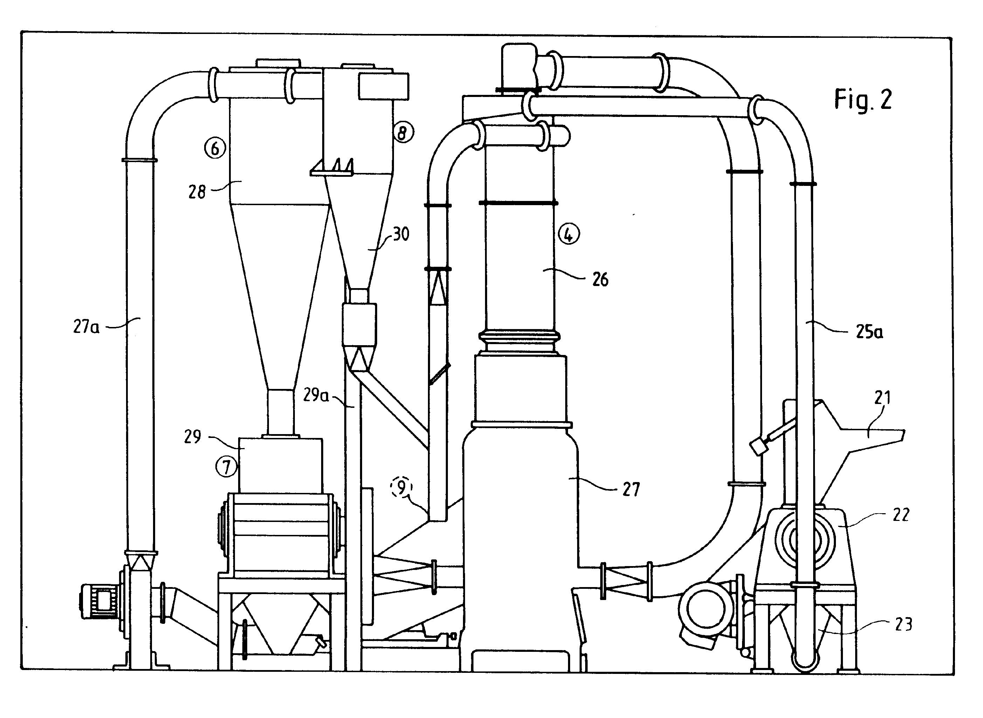

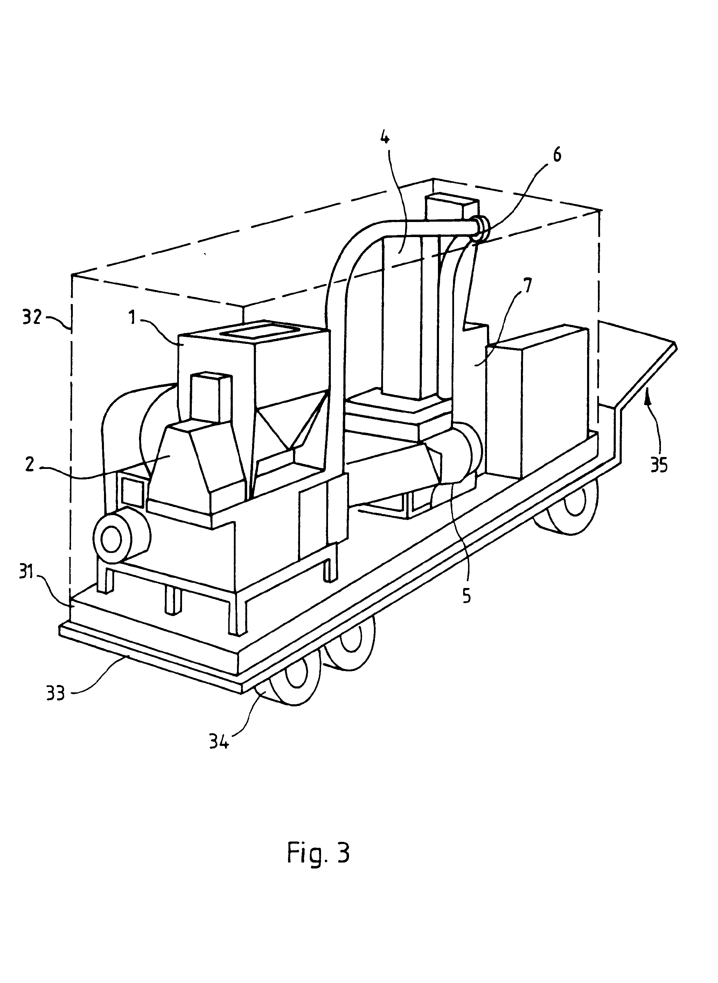

Eine erfindungsgemäße Vorrichtung, wie sie in den Figuren 2 und 3 dargestellt ist, weist zunächst eine Annahmevorrichtung 21 auf, in der die Kunststoffabfälle auf ein Transportband aufgegeben und einer ersten Vorzerkleinerung zugeführt werden. Hierzu kann die Annahmevorrichtung 21 einen hydraulisch bewegten Stempel aufweisen, mittels dessen die Kunststoffabfälle in Messer von schneidmühlen gepreßtwerden, wobei die Preßhäufigkeit stufenlos eingestellt werden kann.

Aus der Annahmevorrichtung gelangen die gegebenenfalls vorzerkleinerten Kunststoffe in eine Zerkleinerungseinrichtung 22, die vorzugsweise in Form eines Shredders ausgeführt ist und in dem sie auf eine Schnitzelgröße von 10 x 10 mm zerkleinert werden. Hierbei werden auch Fremdstoffe, wie Metalle, mitzerkleinert. An die Zerkleinerungseinrichtung 22 schließt sich ein Metallabscheider 23 an, der zweifach ausgeführt ist, einerseits als Überbandmagnet und andererseits als elektrostatischer Abscheider für Buntmetalle.

Der eigentliche Kern der erfindungsgemäßen Verarbeitungsvorrichtung ist der Agglomerator 27, dem die zerkleinerten Kunststoffabfälle über einen Vorratspuffer 26 zugeführtwerden, in den sie über ein Rohrsystem 25a eingeblasen werden. Hierdurch kann der Agglomerator 27 kontinuierlich mit Kunststoffschnitzeln, beispielsweise alleine unter deren Schwerkraft, versorgt werden.

Der Agglomerator 27 weist Rotormesser auf, mittels derer die Kunststoffschnitzel einerseits durch Reibungs- bzw. Friktionskräfte angeschmolzen und andererseits durch ein Sieb mit einer vorgewählten Lochgröße gepreßt werden. Die Geschwindigkeit der Rotormesser ist dabei wählbar, wobei sie derart eingestellt wird, daß ein Anschmelzen und hierdurch mögliches Agglomerieren der Kunststoffe erzielbar ist. Es erfolgt dabei eine Temperaturerhöhung des Kunststoffmaterials bis auf ca. 100 °C. Hierdurch wird einerseits eine Hitzedesinfektion und damit Abtötung von Mikroorganismen, die an den verschmutzten Kunststoffen noch vorhanden sein können, erreicht, andererseits wird eine Schädigung der Kunststoffe selbst, insbesondere von Polyethylen, vermieden, da die Kunststoffe ihren Kunststoffcharakter beibehalten sollen.

Zur Weiterverarbeitung und zum weiteren Transport schließt sich an den Agglomerator eine Kühleinrichtung 28 an, der die agglomerierten Kunststoffteilchen über ein Leitungssystem 27a zugeführt werden. Nach Abkühlung der Teilchen werden diese in einer Nachschneidemühle 29 weiter zerkleinert, und zwar bis auf eine gewünschte vorgewählte Korngröße von 3 mm oderweniger. Hieraufhin kann in einem Kühler 30, dem die Teilchen über ein Rohrsystem 29a zugeführt werden, eine erneute Kühlung erfolgen. Aus dieser Kühleinrichtung werden die Teilchen dann einer externen Lagerungsvorrichtung, wie einem Containersilo oder dergleichen, zugeführt, von wo sie dem Weitertransport zur Verfügung gestellt werden können.

Die gesamte Anlage ist, wie am besten aus Figur 3 ersichtlich ist, auf einem Containerboden 31 angeordnet und durch ein Gehäuse 32 umgeben, das in der Figur 3 gestrichelt angedeutet ist. Der Containerboden kann transportabel ausgebildet sein, indem er beispielsweise auf einen Sattelauflieger 33, der mit Rädern 34 versehen und (bei 35) mit einer Zugmaschine verbindbar ist, aufgesetzt wird.

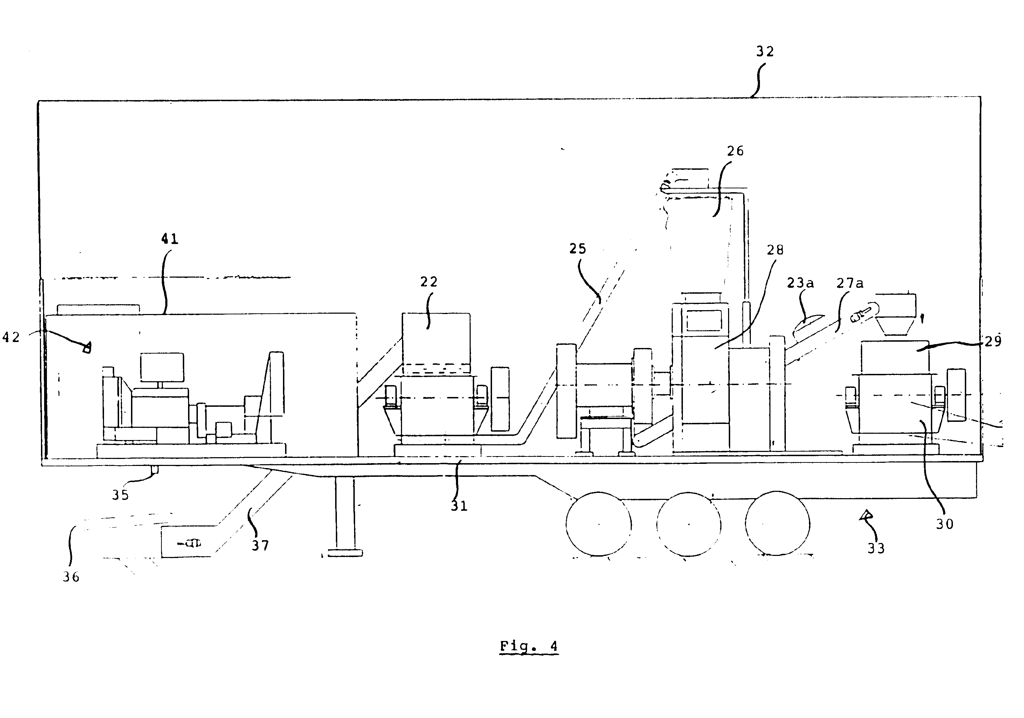

Die Figur 4 zeigt eine bevorzugte Ausgestaltung der erfindungsgemäßen Vorrichtung auf einem Sattelauflieger 33. Das Material wird über ein gestrichelt dargestelltes anlegbares Förderband 36 zugefördert und gelangt über einen Förderer 37 in die Zerkleinerungseinrichtung 22, die vorzugsweise als Mühle ausgebildet ist.

Gegebenenfalls kann das Material auch schon vorzerkleinert und vorsortiert sein.

Von der Zerkleinerungseinrichtung 22 wird das Material über einen Förderer 25, vorzugsweise in Form einer Schnecke, zunächst zum Vorratspuffer oder Zwischenspeicher 26 und aus diesem in den unter demselben angeordneten Aggiomerator28 gebracht. Das agglomerierte Material wird gekühlt über einen Förderer 27a (der also mit einer Kühleinrichtung versehen ist) weitergefördert, wobei an dem Förderer 27a ein Metallabscheider 23a vorgesehen sein kann, um letzte Metallpartikel abzuscheiden.

Das agglomerierte und gekühlte Material gelangt sodann in eine Nachschneidemühle 29 und wird von dort über eine weitere Kühleinrichtung 30 ausgegeben.

Die gesamte Anordnung ist in einem Gehäuse 32 angeordnet. In diesem befindet sich auch ein mit einem separaten Schallschutz 41 versehenes Stromaggregat 42.

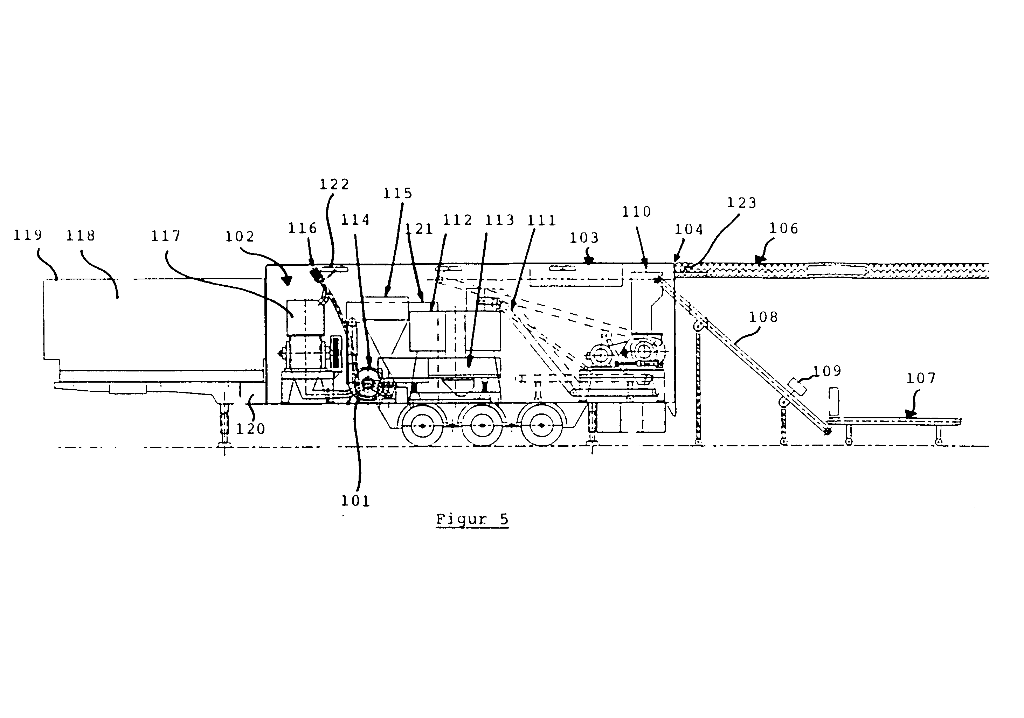

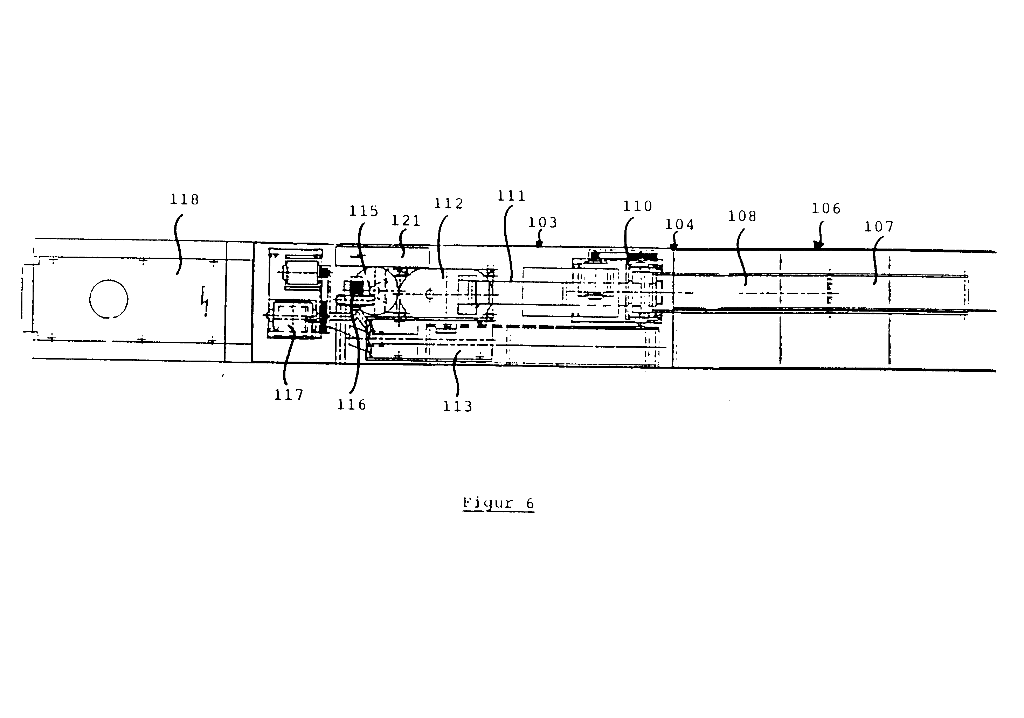

Die Figur 5 zeigt eine weitere bevorzugte Ausgestaltung der erfindungsgemäßen Vorrichtung, die auf einen Drei-Achs-Tiefladesattelauflieger 101 aufgesetzt ist. Die Vorrichtung 101 weist ein die Anlage 102 umgebendes Gehäuse 103 auf, welches in Figur 5 lediglich durch eine durchgezogene Linie angedeutet ist. Wie auch aus Figur 6 ersichtlich ist, ist an der Rückseite 104 des Gehäuses 103 etwas unterhalb der Gehäusedecke ein Gestänge 105 angeordnet, welches während des Transports der Anlage in das Gehäuseinnere eingeschoben werden kann und vor Ort wieder herausgeschoben. Auf das Gestänge ist z.B. als Regenschutz eine Zeltplane 106 aufbringbar. Während des Betriebes der erfindungsgemäßen Vorrichtung ist unterhalb des Gestänges 105 sowie der Zeltplane 106 ein Aufgabeband 107 angeordnet, auf welches das zu zerkleinernde Material zunächst aufgegeben wird. Auf dem Aufgabeband 107 kann das Material bzw. Aufgabegut gegebenenfalls noch weiter sortiert werden. Vom Aufgabeband 107 gelangt das Material auf ein als Steigband ausgebildetes Förderband 108, welches ebenfalls während des Betriebes unterhalb der Zeltplane 106 angeordnet ist. Das Aufgabeband 107 sowie das Steigband 108 sind ebenso wie das Gestänge 105 während des Transportes ins Innere des Gehäuses 103 einschiebbar (gestrichelte Linien in Figur 5).

Oberhalb des Steigbandes 108 ist ein Metalldetektor 109 angeordnet. Bei Detektion von Metallteilen hält das Förderband 108 an und das Metall, welches während des Sortiervorganges verborgen geblieben war, kann manuell entfernt werden. Auf diese Weise wird dafür gesorgt, daß möglichst nur Mischkunststoff über das Steigband 108 zum Vorzerkleinerer 110 gelangt, der vorzugsweise als Mühle ausgebildet ist und eine Schurre aufweist. Der Vorzerkleinerer bzw. die Vorschneidmühle 110 mit Schurre ist nicht nur in der Lage, reinen Mischkunststoff zu zerkleinern, sondern auch Kunststoffe mit Metallverunreinigungen, wie z.B. Dosenbehälter, die trotz allem nicht aussortiert worden sind.

In der Vorschneidmühle 110 wird das Material auf die gewünschte Schnitzelgröße vorzerkleinert und gelangt dann über einen Förderer 111, vorzugsweise eine Austrag- oder Förderschnecke, direkt ohne Zwischenspeicher in den Agglomerator 112. Dieser Agglomerator 112 arbeitet mit rotierenden Messerbalken. Die im Agglomeratorraum aufgefüllten Kunststoffschnitzel werden durch die rotierenden Messerbalken durch die Friktionskräfte erhitzt, bei ca. 130 °C agglomeriert, mit Wasser abgeschreckt (hierzu weist der Agglomerator 112 eine Wasserzuleitung auf), kurze Zeit danach im gleichen Arbeitsraum zerschlagen und dann auf eine Siebrinne 113 ausgeworfen. Die Siebrinne 113 ist unterhalb des Agglomerators 112 angeordnet und derart gestaltet, daß hier die ganze Charge eingefüllt werden kann und über einen Dosierschieber einem Sieb zugeführt wird.

Auf dem Sieb kann schon eine Korntrennung erfolgen, so daß das richtige Korn im Unterlauf der Siebrinne 113 durch ein Gebläse 114 einem Zyklon 115 zugeführt wird, über den es in bereitgestellte Gefäße transportiert werden kann. Das Überkorn aus der Siebrinne 113 gelangt über eine nicht dargestellte Magnetwalze in eine Schnecke 116. Über die Magnetwalze werden letzte Metallpartikel von den Kunststoffen abgeschieden. Von der Schnecke 116 wird das Material einer Nachschneidemühle 117 zugeführt. In dieser wird das Material dann auf die gewünschte Korngröße nachgeschnitten. Über das Gebläse 114 erfolgt dann n der Austrag des geschnittenen Materials in eine externe Lagervorrichtung, z.B. einen Containersilo oder dergleichen.

Die Vorrichtung weist des weiteren auf dem Sattelauflieger 101 im vorderen Bereich vor dem Gehäuse 103 der Anlage 102 einen Generator 118 auf, der in einem eigenen Gehäuse 119 untergebracht ist. Unterhalb des Generators 118 ist an jeder Seite des Sattelaufliegers 101 ein Dieseltank 120 angeordnet. Im Gehäuse 103 weist die Anlage 102 einen Schaltschrank 121 zur Steuerung der Anlage auf. Auch weist die Vorrichtung sowohl im Inneren des Gehäuses 103 als auch außen jeweils eine Beleuchtung 122, 123 auf, so daß der Betrieb der Anlage tageszeitunabhängig ist.

Statt der Vorschneidemühle 110 kann auch ein Zerreißer eingesetzt werden. Auf diese Weise können die gesamten nicht aufgelösten Kunststoffballen mittels eines Gabelstaplers in die Schurre aufgegeben und durch den Zerreißer vorzerkleinert werden. Der Zerreißer weist eine langsam rotierende Welle auf, in die die Kunststoffballen mittels eines hydraulischen Stempels gepreßt werden. Der Vorschub des Stempels richtet sich dabei nach der Stromaufnahme des Wellenantriebmotors.

Selbst eine solche kompakt ausgebildete und relativ klein dimensionierte Vorrichtung reicht aus, um mit einer Stundenleistung von 1.000 kg pro Stunde bis zu 2500 Jahrestonnen an entsprechenden Kunststoffabfällen zu verarbeiten, wobei diese Abfallmenge diejenige einer Einwohnerzahl von etwa 300.000 im Jahr ist. Abfallsammelstellen werden aber, insbesondere im ländlichen Raum, für eine viel geringere Anzahl von Einwohnern vorgesehen, bis zu weniger als 1/10 der genannten Zahl von 300.000. Bei derartigen Sammelstellen fällt eine geringe Menge des hier in Frage kommenden Kunststoffabfalls an, die in nur Stunden oder einem Tag verarbeitet werden kann, so daß bei einer solchen Sammelstelle eine stationäre Anlage nicht wirtschaftlich ist, da sie nicht fünf Tage die Woche, geschweige denn rund um die Uhr arbeiten könnte.

Gerade für solche Fälle ist die erfindungsgemäße Vorrichtung optimal, da sie an den Sammeltagen der entsprechenden Abfallsammelstellen zu diesen gebracht wird, nach der oben erwähnten Vorsortierung die Verarbeitung des Materials durchführt und nach einer mehrere Stunden oder einen Tag dauernden Verarbeitungszeit zur nächsten Sammelstelle gebracht wird etc., bis sie in einem vorgegebenen Rhythmus, beispielsweise wöchentlich oder vierzehntägig, wieder zur Ausgangsabfallsammelstelle zurückgelangt.

## Patentansprüche

1. Verfahren zum Aufbereiten von aus unterschiedlichen Kunststoffen bestehendem Kunststoffabfall, gegebenenfalls im Verbund mit weiteren Materialien, zur weiteren Verarbeitung, wobei der Abfall zerkleinert wird, Metalle abgeschieden werden und Kunststoffabfall agglomeriert wird, dadurch gekennzeichnet, daß der aus unterschiedlichen Kunststoffen bestehende, agglomerierte Kunststoffabfall nach Abscheidung eisenhaitiger Metalle weiter zerkleinert wird.

2. Verfahren nach Anspruch 1, dadurch gekennzeichnet, daß der Kunststoffabfall vor Agglomerierung in zwei Stufen zerkleinert wird.

3. Verfahren nach Anspruch 1 oder 2, dadurch gekennzeichnet, daß voluminöse Kunststoffteile mittels Zwangszuführung einer ersten Zerkleinerungsstufe zugeführt werden.

4. Verfahren nach einem der vorangehenden Ansprüche, dadurch gekennzeichnet, daß eine erste Metallabscheidung vor der ersten Zerkleinerungsstufe erfolgt.

5. Verfahren nach Anspruch 4, dadurch gekennzeichnet, daß die erste Metallabscheidung mittels eines Metalldetektors sowie manuellen Entfernens von Metallteilen erfolgt.

6. Verfahren nach einem der vorangehenden Ansprüche, dadurch gekennzeichnet, daß die Kunststoffabfallteile vor der Metallabscheidung auf eine Größe von ca. 10 mm zerkleinert werden.

7. Verfahren nach einem der vorangehenden Ansprüche, dadurch gekennzeichnet, daß magnetisierbare Metalle mittels Magneten aus dem Kunststoffabfall herausgehoben werden.

8. Verfahren nach einem der vorangehenden Ansprüche, dadurch gekennzeichnet, daß Buntmetalle mittels elektrostatischer Abscheidung entfernt werden.

9. Verfahren nach einem der vorangehenden Ansprüche, dadurch gekennzeichnet, daß die zerkleinerten Kunststoffabfallteile vor Agglomeration zwischengespeichert werden, um eine kontinuierlich erfolgende Agglomeration zu gewährleisten.

10. Verfahren nach einem der vorangehenden Ansprüche, dadurch gekennzeichnet, daß die Kunststoffteile zur Agglomerierung angeschmolzen werden.

11. Verfahren nach Anspruch 10, dadurch gekennzeichnet, daß die angeschmolzenen Kunststoffteile durch ein Sieb gepreßt werden.

12. Verfahren nach Anspruch 10 oder 11, dadurch gekennzeichnet, daß die Kunststoffteile gekühlt werden.

13. Verfahren nach einem der vorangehenden Ansprüche, dadurch gekennzeichnet, daß die Kunststoffteile mit Wasser abgeschreckt werden.

14. Verfahren nach einem der vorangehenden Ansprüche, dadurch gekennzeichnet, daß die Kunststoffteile nach Agglomeration und gegebenenfalls Kühlung oder Abschrecken weiter zerkleinert werden.

15. Verfahren nach Anspruch 14, dadurch gekennzeichnet, daß die bereits eine vorgegebene Korngröße aufweisenden Kunststoffteile von den übrigen Kunststoffteilen getrennt werden.

16. Verfahren nach Anspruch 11, dadurch gekennzeichnet, daß magnetisierbare Teilchen mittels einer Magnetwalze aus dem Kunststoffabfall entfernt werden.

17. Verfahren nach einem der Ansprüche 14 bis 16, dadurch gekennzeichnet, daß die Kunststoffteile bis zu Größen von 3 mm oder weniger zerkleinert werden.

18. Verfahren nach einem der Ansprüche 14 bis 17, dadurch gekennzeichnet, daß die zerkleinerten Kunststoffteile weiter gekühlt werden.

19. Verfahren nach einem derAnsprüche 12 bis 18, dadurch gekennzeichnet, daß in den Kühlstufen eine Kühlung bis auf 40 °C erfolgt.

20. Vorrichtung zum Aufbereiten von aus unterschiedlichen Kunststoffen bestehendem Kunststoffabfall, gegebenenfalls in Verbund mit weiteren Materialien, zur weiteren Verarbeitung, mit Zerkleinerungseinrichtungen (22, 29, 110, 117), Metallabscheider (23, 23a) und mindestens einem Agglomerator (27, 112), dadurch gekennzeichnet, daß in Förderrichtung des zu verarbeitenden Kunststoffabfalls zumindest hinter dem Agglomerator (27, 112) ein Metallbscheider (23a) zur Abscheidung eisenhaltiger Metalle aus dem Kunststoffabfall angeordnert ist.

21. Vorrichtung nach Anspruch 20, dadurch gekennzeichnet, daß eine Annahmevorrichtung (21) mit einem Vorzerkleinerer für voluminöse Teile versehen ist.

22. Vorrichtung nach Anspruch 21, dadurch gekennzeichnet, daß der Vorzerkleinerer Schneidmühlen aufweist.

23. Vorrichtung nach einem derAnsprüche 20 bis 22, gekennzeichnetdurch eine Zwangszuführung mit einem hydraulisch bewegten Zuführstempel.

24. Vorrichtung nach einem der Ansprüche 20 bis 23, gekennzeichnet durch einen die Kunststoffabfälle bis auf Schnitzelgrößen von 10 x 10 mm zerkleinernden Shredder als Zerkleinerungseinrichtung (22).

25. Vorrichtung nach einem der Ansprüche 20 bis 23, gekennzeichnet durch eine die Kunststoffschnitzel bis auf Schnitzelgrößen von 10 x 10 mm zerkleinernde Vorschneidmühle (110) mit Schurre.

26. Vorrichtung nach Anspruch 25, gekennzeichnet durch einen der Vorschneidmühle (110) mit Schurre vorgeordneten Metalldetektor (109).

27. Vorrichtung nach einem derAnsprüche 20 bis 26, dadurch gekennzeichnet, daß der Metallabscheider (23) einen Überbandmagneten zum Herausheben magnetisierbarer oder eisenhaltiger Metalle aus dem Abfallgut aufweist.

28. Vorrichtung nach einem derAnsprüche 20 bis 27, gekennzeichnet durch einen elektrostatischen Abscheider für Buntmetalle.

29. Vorrichtung nach einem der Ansprüche 20 bis 28, dadurch gekennzeichnet, daß vor dem Agglomerator (27) ein Zwischenspeicher (26) zur Sicherstellung einer kontinuierlichen Versorgung des Agglomerators (27) mit Kunststoffteilchen angeordnet ist.

30. Vorrichtung nach Anspruch 29, dadurch gekennzeichnet, daß der Zwischenspeicher (26) auf dem Agglomerator (27) angeordnet ist, so daß die Kunststoffschnitzel durch Schwerkraft in den Agglomerator (27) fallen können.

31. Vorrichtung nach einem der Ansprüche 20 bis 30, dadurch gekennzeichnet, daß der Agglomerator (27, 112) ein Sieb und die Kunststoffschnitzel nach Anschmelzen durch das Sieb pressende Rotormesser aufweist.

32. Vorrichtung nach einem der Ansprüche 20 bis 31, dadurch gekennzeichnet, daß dem Agglomerator (27) eine Kühleinrichtung (28) nachgeordnet ist.

33. Vorrichtung nach einem der Ansprüche 20 bis 31, dadurch gekennzeichnet, daß der Agglomerator (112) mit einer Anlage zum Zuführen von Wasser zum Abschrecken der Kunststoffteile verbunden ist.

34. Vorrichtung nach einem der Ansprüche 20 bis 33, dadurch gekennzeichnet, daß in Förderrichtung des zu verarbeitenden Kunststoffabfalls hinter dem Agglomerator (112) eine Siebrinne (113) zum Trennen des Kunststoffabfalls angeordnet ist.

35. Vorrichtung nach Anspruch 34, gekennzeichnet durch eine dem Oberlauf der Siebrinne (113) nachgeordneten Magnetwalze zur Abscheidung eisenhaltiger Metalle aus dem Kunststoffabfall.

36. Vorrichtung nach Anspruch 34 oder 35, gekennzeichnet durch ein dem Unterlauf der Siebrinne (113) nachgeordnetes Gebläse (114) mit Zyklon (115) zum Transport der vom Kunststoffabfall separierten Kunststofftei le.

37. Vorrichtung nach einem der Ansprüche 20 bis 36, dadurch gekennzeichnet, daß in Förderrichtung des zu verarbeitenden Kunststoffabfalls hinter dem Agglomerator (27, 112) und gegebenenfalls einer diesem nachgeordneten Kühleinrichtung (28) eine Nachschneidemühle (29, 117) als Zerkleinerer angeordnet ist.

38. Vorrichtung nach Anspruch 37, dadurch gekennzeichnet, daß die Nachschneidemühle (29, 117) derart ausgebildet ist, daß die Agglomerate auf eine Korngröße von 3 mm oder weniger zerkleinert werden.

39. Vorrichtung nach Anspruch 37 oder 38, gekennzeichnet durch eine der Nachschneidemühle (29) nachgeordnete Kühleinrichtung (30).

40. Vorrichtung nach einem der Ansprüche 20 bis 39, dadurch gekennzeichnet, daß sie transportabel ausgebildet ist.

41. Vorrichtung nach einem der Ansprüche 20 bis 40, dadurch gekennzeichnet, daß sie in einem Gehäuse (32, 103) auf einem Containerboden (31) angeordnet ist.

42. Vorrichtung nach einem der Ansprüche 20 bis 41, gekennzeichnet durch Anordnung auf einem Sattelauflieger (33, 101).
